(19) **Europäisches Patentamt**
**European Patent Office**
**Office européen des brevets**

(11) **EP 3 828 534 B1**

(12) **EUROPEAN PATENT SPECIFICATION**

(45) Date of publication and mention
of the grant of the patent:
**04.01.2023 Bulletin 2023/01**

(21) Application number: **20210190.3**

(22) Date of filing: **27.11.2020**

(51) International Patent Classification (IPC):
***G01N 23/223*** *(2006.01)* ***G01B 15/02*** *(2006.01)*

(52) Cooperative Patent Classification (CPC):
**G01N 23/223; G01B 15/02**

(54) **X-RAY FLUORESCENCE IMAGING FOR DETERMINING LAYER THICKNESSES**

BILDGEBUNG MITTELS RÖNTGENFLUORESZENZ ZUR BESTIMMUNG VON SCHICHTDICKEN

IMAGERIE PAR FLUORESCENCE X POUR DÉTERMINER DES ÉPAISSEURS DE COUCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2019 CZ 20190727**

(43) Date of publication of application:
**02.06.2021 Bulletin 2021/22**

(73) Proprietor: **Ustav teoretické a aplikované
mechaniky
AV CR, v.v.i.
19000 Praha 9 (CZ)**

(72) Inventor: **Vavrík, Daniel
18000 Praha 8 (CZ)**

(74) Representative: **Sedlák, Jirí
Okruzni 2824
370 01 Ceské Budejovice (CZ)**

(56) References cited:
**WO-A1-2016/116078 CZ-U1- 33 590**

- **ROMANO FRANCESCO PAOLO ET AL: "Macro
and Micro Full Field X-Ray Fluorescence with an
X-Ray Pinhole Camera Presenting High Energy
and High Spatial Resolution", ANALYTICAL
CHEMISTRY, vol. 86, no. 21, 17 October 2014
(2014-10-17), pages 10892-10899, XP055791835,
ISSN: 0003-2700, DOI: 10.1021/ac503263h**
- **CZYZYCKI MATEUSZ ET AL: "Monte Carlo
simulation code for confocal 3D micro-beam
X-ray fluorescence analysis of stratified
materials", X-RAY SPECTROMETRY, vol. 40, no.
2, 4 March 2011 (2011-03-04), pages 88-95,
XP055791773, GB ISSN: 0049-8246, DOI:
10.1002/xrs.1300**

**EP 3 828 534 B1**

**Description**

Field of the Invention

The invention presents a method of the non-destructive examination of a layered structure lying on a substrate that is massive compared to the layered structure in terms of the ratio of the total thickness of the layered structure and the thickness of the substrate. The method according to the invention is intended in particular for the non-destructive examination of polychromy on valuable works of art and monuments, such as medieval paintings and sculptures, however, the method can also be applied to different tasks focused on non-destructive examination of layered structures.

Background of the Invention

The non-destructive examination of a layered structure (i.e. stratigraphy) covering a massive and structured substrate, such as wood, is rather a complex task. A good example of such a layered structure is polychromy found in medieval panel paintings and sculptures. The total thickness of polychromy is here in the order of tens of millimetres while the thickness of individual layers is in the order of units of micrometres up to tens of micrometres. Considering the disproportion in thickness between polychromy and wooden substrate, the description of a layered polychromatic composition using a common computer tomography method with sufficient resolution is infeasible.

The total thickness of the layered coat can be measured in a selected place using ultrasonography as disclosed in the document DOI: 10.4067/S0718-221X2018005041301, however, no stratigraphic data can be obtained in this way.

Stratigraphy is commonly performed using confocal X-ray fluorescence imaging assisted by capillary X-ray optical systems as disclosed in the document DOI: 10.1016/j.radphyschem.2019.05.005. This method is rather time-consuming and therefore, it is intended in particular for measurements carried out only in selected points of the examined object, while the analysis of larger areas of the examined object is difficult due to time demands of such measurements.

Another technology available for stratigraphy examination is so-called Compton imaging tomography that is disclosed, for example, in the patent application CZ 2015-623 A3, and also in the article published by K. Osterloh et. al., X-RAY Backscatter Imaging with a Novel Twisted Slit Collimator (In. ECNDT 2012, NDT.net, 2010). Compton imaging tomography utilizes backscattered photons emanated from an area irradiated by a thin and plane X-ray beam. This method was developed for the testing of parts that are available from one side only with a typical resolution in the order of hundreds of micrometres. The principle is as follows: the object is irradiated by a plane X-ray beam that passes through the object's surface at a selected angle (typically 45°); an X-ray camera detects the examined section from the side - perpendicularly to the plane of the plane beam, by which procedure information on the object's structure in one section is obtained. Three-dimensional data is recorded by scanning the examined object in sections with an equidistant increment.

Disadvantages of the aforementioned method rest in the fact that to obtain resolution in the order of micrometres the plane beam must be very thin while the spatial increment between individual sections needs to be minimized. More specifically, the thickness of the beam and the size of image pixels of the employed X-ray camera and the required resolution are comparable. This results in the excessive times required for measurements to analyse a reasonable size of the surface of the object under examination. Moreover, the intensity of the original divergent X-ray beam produced by an X-ray tube dramatically drops when the original X-ray beam is converted into a thin plane X-ray beam.

As disclosed in another patent application, CZ 2015-27 A3, a plane X-ray beam that goes through the examined area of the object under examination at an acute angle of incidence is used for the examination of the layered structures of works of art. In addition to the passage of the X-ray beam, the transmitted X-ray beam is detected (transmission measurement) along with fluorescent radiation emanating from the irradiated material of the examined area. Detection proceeds in two ways, namely with the detector that is uncovered to obtain elemental analysis and with the detector that is covered by a cover fitted with an aperture for geometrically describable transmission and incidence of fluorescent radiation onto the sensitive surface of the detector.

Disadvantages of the aforementioned solution rest in the fact that the invented method is complicated as the thickness of the used plane beam must be in the order of micrometres to attain resolution in the order of micrometres as well, by which the plane beam is very subdued, and moreover, it is necessary to analyse data obtained by three detectors, which requires the resulting output to be combined from three partial results. The complicated method of measurement requires a complicated apparatus for the measurement implementation, which increases not only the price of the invention, but also the likelihood of damage or functional unavailability.

The task of the invention is to create a method of non-destructive examination of a layered structure that would attain high resolution in the order of micrometres when a plane beam with the thickness in the order of millimetres is used, which would be less complicated in terms of design of the apparatus required for the method implementation compared to the known solutions and which would allow the speed of the measurement implementation to be optimized to acceptable values compared to the known solutions.

## Summary of the Invention

The set goal has been achieved by the method of the non-destructive examination of a layered structure according to the invention mentioned below.

The method of the non-destructive examination of a layered structure is defined by the appended claims and comprise amongst others the following steps:

> a) the place of interest in the examined object is irradiated by a plane beam of penetrating radiation that hits the place of interest at an acute angle of incidence,
>
> b) the fluorescent radiation and scattered particles coming out of the irradiated place of interest in the examined object are detected by at least one imaging camera for penetrating radiation,
>
> c) the signal from the imaging camera is analysed to determine the results of the non-destructive measurement of the layered structure.

The essence of the invention rests in the fact that for the step a) at least one side of the plane beam of penetrating radiation is modelled into a sharp edge. Thanks to the sharp edge, the interface between the material affected and that not affected by the plane beam of penetrating radiation is clearly distinguishable.

In addition, it is preferred when within the framework of step a) the size of the angle of incidence used is within the range from 0° to 10° as the resolution required for the measurement of the thickness of layers is inversely proportionate to tangent of angle of incidence of the plane beam hitting the surface of the place of interest in the examined object. If the value of angle of incidence is in the order of units of degrees, we can measure, using the imaging camera with resolution in the order of tens of micrometres, layers with the thickness in the order of the tens of micrometres with an accuracy of units of micrometres.

Also, within the framework of step c), sections in the signal of the imaging camera characteristic with an increasing and/or decreasing change in values are detected for the transmission of the penetrating radiation beam at its sharp edge through the place of interest in the examined object, and based on the number and behaviour of such changes, the number and the thickness of individual layers of the layered structure in the irradiated place of interest of the examined object are determined. Preferably, the signal of the imaging camera comprised of fluorescent and scattered photons gradually increases with the increasing depth of its penetration into the layered structure, while the increasing signal for the next layer of the layered structure is detected only after the edge of the penetrating beam has penetrated through the previous layer completely. From the end of the first layer, it is possible to detect another increase in the signal caused by the penetration of the edge of the beam through the second layer. In the case that the area of emergence of the edge of the penetrating radiation beam from the layered structure is detected, also a decrease in the signal can be observed.

In addition to the thickness of individual layers of the layered structure, overall information about the condition and composition of the superficial layers is obtained on the basis of the analysis of fluorescent and scattered photons in the area of material found between the entry and exit of the plane beam when the superficial layers are completely within the beam. The width of the penetrating radiation beam can be selected arbitrarily and can be relatively large, typically by one order compared to the methods mentioned above.

Preferably, an imaging X-ray camera sensitive to low-energy X-ray photons with resolution in the order of tens of $\mu$m is used. It is possible to use low-energy X-ray radiation, which, in particular with organic substrates such as for example wood, does not generate high quantities of secondary penetrating radiation in the wooden material.

In a preferred embodiment, a slit collimator with planar and smooth surface of the slit is used to model a sharp edge of the plane beam of penetrating radiation. Within the framework of the experimental measurements it was discovered, contrary to expectations, that the planar and smooth surface of glass in the collimator slit has an amplifying effect on penetrating radiation with sharp edges of the plane beam of the penetrating radiation, and not weakening one as expected.

The invented method helps expedite non-destructive measurements of a layered structure, does not result in a dramatic decrease of the intensity of X-ray beam when formed into a planar shape as the size of the beam thickness can be considerably larger than the size of the required resolution, significantly simplifies the known procedures and apparatuses for the implementation of non-destructive stratigraphy, and maintains the high resolution of the measurement.

## Brief Description of Figures

The present invention will be explained in detail by means of the following figures where:

Fig. 1     shows a schematic diagram of the process of the invented method of measurement,

Fig. 2     shows a simplified principle of stratigraphic measurement utilizing a sharp edge of a plane beam,

Fig. 3     a chart showing the characteristic of the signal obtained from the measurement of a sample with two-layer polychromy.

## Examples of the Invention Embodiment

It shall be understood that the specific cases of the invention embodiments described and depicted below are provided for illustration only and do not limit the invention to the examples provided here. Persons skilled in the art will find or, based on routine experiments, will be able to provide a greater or lesser number of equivalents to the specific embodiments of the invention which are described here.

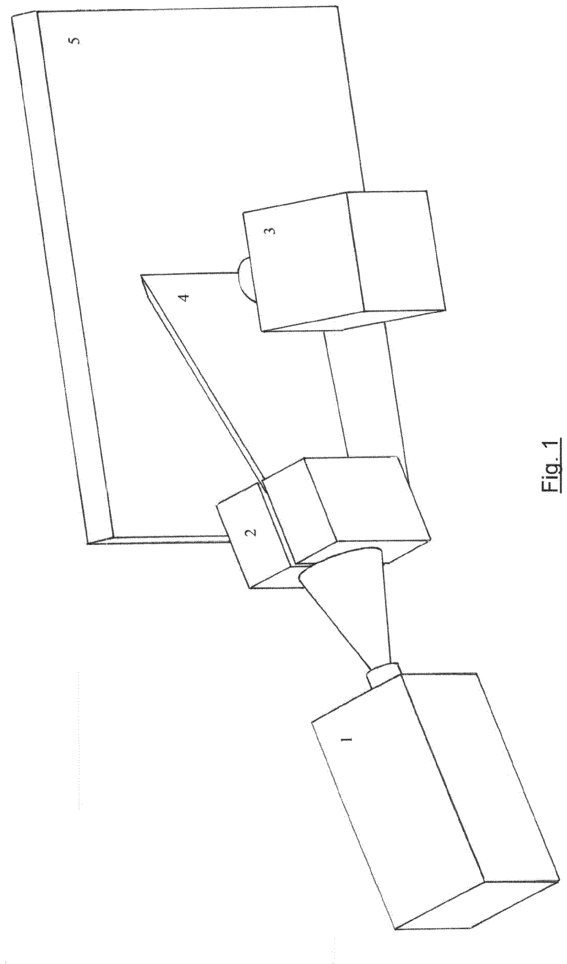

Fig. 1 shows a schematic representation of the method of the non-destructive measurement of a layered structure on the surface of an examined object **5,** being for example a painting on a wooden panel, a painting on canvas, etc. The thickness of the layers of the layered structure is multiple times lower than the thickness of the supporting substrate of the examined object **5**. From the source **1** of penetrating radiation, a beam of penetrating radiation is emitted and modelled in the collimator **2** into a plane beam **4** of penetrating radiation with a sharp edge. This plane beam **4** hits the place of interest of the examined object **5**, through which it starts penetrating. At the same time, secondary penetrating radiation comprising fluorescent radiation and scattered particles is generated in the material found along the path of the plane beam **5**. This secondary radiation is detected by the imaging camera **3**. Signal from the imaging camera **3** is subsequently analysed.

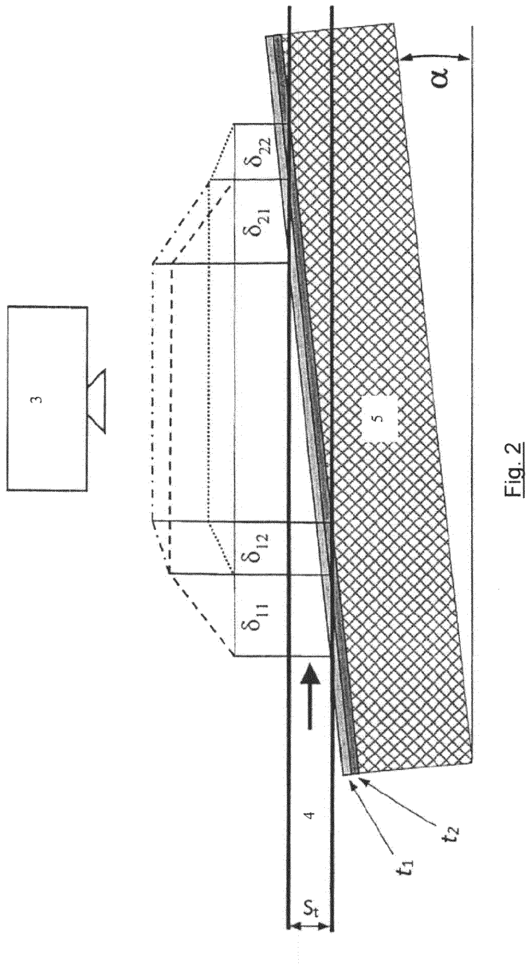

The principle of the method is graphically represented in Fig. 2 where a section of the place of interest of the examined object **5** and also a section of the plane beam **4** of penetrating radiation with a sharp edge can be seen. In addition, the direction of radiation spreading through the space is provided. The thickness $S_t$ of the plane beam **4** remains constant. The angle $\alpha$ of incidence is acute and the size of it is in the order of units of degrees. The examined object **5** is covered by two superficial layers whose thickness is $t_1$ and $t_2$, respectively.

As it is obvious from Fig. 2, the deeper the plane beam **4** penetrates into the first layer of the layered structure, the more amplified the measured signal is as it can be seen in the first increasing passage $\delta_{11}$ of the signal. At the transition between the first and second layer, the signal from the first layer becomes substantially constant with the second increasing passage $\delta_{12}$ of the signal for the second layer becoming noticeable. Similar behaviour is detected also in the area of emergence of the plane beam **4** from the place of interest of the examined object **5**, where for the first layer, the passage $\delta_{21}$ of the signal is visible with a decreasing value, The subsequent visible passage $\delta_{22}$ of the signal with decreasing values for the second layer can be seen as well.

For the sake of clarity and better understanding of the invented method, the increase and/or decrease in the passage $\delta$ of the signal of both layers is depicted linearly, however, under real conditions, non-linear behaviour of the signal can be expected.

As far as the determination of the thickness of the arbitrary first layer is concerned, the equation is as follows:

$$t_1 = \delta_{11} \cdot tg\ \alpha$$

As far as the determination of the thickness of the arbitrary n-th layer is concerned, the equation is as follows:

$$t_n = \delta_{1n} \cdot tg\ \alpha$$

As far as the determination of the total thickness of the superficial structure is concerned, the equation is as follows:

$$T = \Sigma t_n = \delta_{1n} \cdot tg\ \alpha$$

Practically the same equations apply to layers in the area of emergence of the plane beam **4** from the place of interest of the examined object **5**.

Therefore, the accuracy of measurement is affected by the quality of the signal in which passage $\delta$ of the signal concerning transmission through the layered structure are searched for.

The source **1** of penetrating radiation is an X-ray tube operated at the voltage of 40 kV and the current of 0.5 mA. The beam of penetrating radiation was, using the slit collimator **2** made of lead glass, modelled into a plane beam **4** of penetrating radiation with the thickness of 0.5 mm. A flat examined object **5** was arranged onto a handling table with the plane beam **4** of penetrating radiation hitting the place of interest of the examined object **5** at the angle $\alpha$ of incidence of 5°.

The imaging camera **3** referred to a pinhole XRF camera oriented perpendicularly to the surface of the examined object **5**, i.e. the detector of the XRF camera was oriented in parallel to the plane beam **4** of penetrating radiation. The XRF camera was installed on a driver that directed the camera to obtain undisturbed receipt of secondary radiation. The XRF camera was fitted with Timepix detector with the thickness of a silicon chip of 300 $\mu$m with resolution 256 × 256 square pixels with the side length of 55 $\mu$m. Secondary radiation was projected through the pinhole of the XRF camera with a diameter of 100 $\mu$m. The detection threshold of the XRF camera was set at 3 keV to filter off the noise generated by the detector. Data was recorded in the course of time for all events exceeding the threshold value of 3 keV and individual events were subsequently analysed within the framework of the analysis method, which provided information about the energy of each detected particle.

The observed surface of the place of interest of the examined object **5** was enlarged 1.4-fold compared to the distance of the XRF camera pinhole and the examined object **5** to obtain the ratio in which one pixel of the XRF camera detector corresponds to 40 $\mu$m on the surface of the place of interest of the examined object **5**.

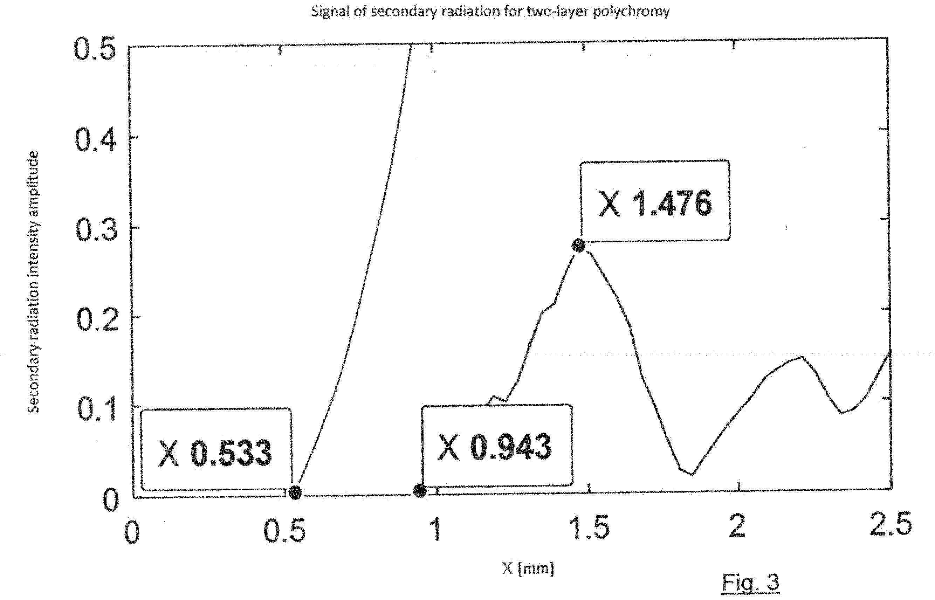

In the chart in Fig. 3 showing a record of the signal for the test sample with two-layer polychromy, a passage of the signal can be seen between the values of 0.533 mm and 0.943 mm, where the value 0.533 represents the beginning of the first polychromy layer, which starts emitting secondary radiation represented by the signal with the plane beam **4** penetrating the material, and the value 0.943 represents the beginning of contribution to secondary radiation emitted by the second polychromy layer, based on which it can be concluded that the end of the first layer is concerned.

Another passage of signal representing secondary radiation is found between the values 0.943 mm and 1.476 mm, where the increase in intensity of secondary radiation caused by the plane beam **4** penetrating deeper and deeper into the second layer is noticeable with a sudden drop at the value of 1.476 mm, which can be interpreted as the exit of the plane beam **4** from the second polychromy layer.

The angle of incidence during the test measurement was 5°. The tangent of angle 5° is 0.09.

For the calculation of the total thickness of polychromy in the place of interest on the test sample the undermentioned formula can be applied:

$$t_c = (1{,}476 \ \mu m - 533 \ \mu m) \cdot 0.09$$

$$t_c = 84 \ \mu m$$

The calculation of the thickness of the first polychromy layer is as follows:

$$t_1 = (943 \ \mu m - 533 \ \mu m) \cdot 0.09$$

$$t_z = 37 \ \mu m$$

The calculation of the thickness of the second layer is elementary subtraction:

$$t_2 = t_c - t_1$$

$$t_2 = 84 - 37$$

$$t_2 = 47 \ \mu m$$

The aforementioned results agreed with the experimental measurement carried out by a control method.

Industrial Applicability

The method of the non-destructive examination of a layered structure according to the invention will find application in research and restoration of works of art, in the field of analysis of the quality of surface treatment applied onto massive substrates, e.g. in the case of measurement of the thickness of protective coating.

Overview of the Positions

| | |
|---|---|
| 1 | source of penetrating radiation |
| 2 | collimator of penetrating radiation |
| 3 | imaging camera |
| 4 | plane beam of penetrating radiation with a sharp edge |
| 5 | examined object |
| $\alpha$ | angle of incidence |
| $\delta_{11}$ | passage of signal with an increasing change of values for the first layer |
| $\delta_{12}$ | passage of signal with an increasing change of values for the second layer |
| $\delta_{21}$ | passage of signal with a decreasing change of values for the first layer |
| $\delta_{22}$ | passage of signal with a decreasing change of values for the second layer |
| $t_1$ | thickness of the first layer |
| $t_2$ | thickness of the second layer |
| $S_t$ | thickness of the plane beam of penetrating radiation |

**Claims**

1. The method of the non-destructive examination of a layered structure comprising the following steps:

   a) the place of interest in the examined object (5) is irradiated by a plane beam (4) of penetrating radiation that hits the place of interest at an acute angle ($\alpha$) of incidence,
   b) the fluorescent radiation and scattered particles emanating from the irradiated place of interest in the examined object (5) are detected by at least one imaging camera (3) for the penetrating radiation,
   c) the signal from the imaging camera (3) is analysed to determine the results of the non-destructive measurement of the layered structure,

   **characterized in that** for step a) at least one side of the plane beam (4) of penetrating radiation is modelled into a sharp edge and that within the framework of step a) the size of the angle ($\alpha$) of incidence used falls within the range from 0° to 10°, and in addition, within the framework of step c) in the characteristic of the signal from the imaging camera (5), passages ($\delta$) of the signal with an increasing and/or decreasing change of values along a propagation direction of the penetrating radiation are detected for the area of penetration of the plane beam (4) of penetrating radiation at its sharp edge through the place of interest of the examined object (5), where, based on the number and behaviour of such changes of values, the number and the thickness (t) of individual layers comprising the layered structure in the irradiated place of interest of the examined object (5) are determined.

2. The method according to claim 1, **characterized in that** X-ray is used.

3. The method according to claim 1 or 2, **characterized in that** an imaging camera (3) with resolution in the order of tens of $\mu$m is employed.

4. The method according to any of claims 1 through 3, **characterized in that** a slit collimator (2) with planar and smooth surface of the slit is used to model a sharp edge of the plane beam (4).

**Patentansprüche**

1. Verfahren zur zerstörungsfreien Untersuchung einer Schichtstruktur, das eine Folge von Schritten umfasst:

a) der Ort von Interesse des Prüfobjekts (5) wird von einem ebenen Strahlenbündel (4) durchdringender Strahlung bestrahlt, der unter einem spitzen Einfallswinkel ($\alpha$) auf den Ort von Interesse trifft,
b) Fluoreszenzstrahlung und gestreute Teilchen, die aus dem bestrahlten Ort von Interesse des Prüfobjekts (5) austreten, werden von mindestens einer bildgebender Kamera (3) für durchdringende Strahlung abgebildet,
c) das Signal der bildgebenden Kamera (3) wird ausgewertet, um die Ergebnisse der zerstörungsfreien Messung der Schichtstruktur zu ermitteln,

**dadurch gekennzeichnet, dass** für den Verfahrensschritt (a) mindestens eine Seite des ebenen Strahlenbündels (4) der durchdringenden Strahlung zur scharfen Kante modelliert wird, dass im Verfahrensschritt (a) die Größe des Einfallswinkels ($\alpha$) im Bereich von 0° bis 10° verwendet wird und dass im Verfahrensschritt (c) in der Charakteristik des Gesamtsignals Übergänge ($\delta$) des Signals mit zunehmenden und/oder abnehmenden Werten gefunden werden, die für den Durchdringungsbereich des ebenen Strahlenbündels (4) der durchdringenden Strahlung an seiner scharfen Kante durch den Ort von Interesse des Prüfobjekts (5) registriert werden, woraufhin von ihrer Anzahl und Verlauf die Anzahl und die Stärke (t) der Schichten der Schichtstruktur im bestrahlten Ort von Interesse des Prüfobjekts (5) bestimmt werden.

2. Verfahren nach Anspruch 1, **dadurch gekennzeichnet, dass** Röntgenstrahlung verwendet wird.

3. Verfahren nach Anspruch 1 oder 2, **dadurch gekennzeichnet, dass** eine bildgebende Kamera (3) mit einer Auflösung in der Größenordnung von Zehnen von $\mu$m verwendet wird.

4. Verfahren nach einem der Ansprüche 1 bis 3, **dadurch gekennzeichnet, dass** ein Spaltkollimator (2) mit einer ebenen und glatten Spaltfläche verwendet wird, um die scharfe Kante des ebenen Strahlenbündels (4) der durchdringenden Strahlung zu modellieren.

**Revendications**

1. Procédé d'examen non destructif d'une structure en couches comprenant une séquence d'étapes :

a) le point d'intérêt de l'objet (5) en examen est irradié par un faisceau (4) plan de rayonnement pénétrant incident sur la région d'intérêt à un angle ($\alpha$) d'incidence aigu,
b) le rayonnement fluorescent et les particules diffusées émergeant du site d'intérêt irradié de l'objet (5) en examen sont imagés par au moins une caméra (3) d'imagerie à rayonnement pénétrant,
c) le signal de la caméra (3) d'imagerie est évalué pour déterminer les résultats de la mesure non destructive de la structure en couches,

**charactérisé en ce que** pour étape (a) du procédé au moins un côté du faisceau (4) plan de rayonnement pénétrant vers l'arête vive est modélisé, que en étape (a) du procédé la grandeur de l'angle (a) d'incidence étendant de 0° à 10° est utilisée, et que dans l'étape (c) du procédé des passages ($\delta$) du signal avec des valeurs croissantes et/ou décroissantes sont trouvés dans la caractéristique du signal total, qui ont été enregistrées pour la région de pénétration du faisceau (4) plan de rayonnement pénétrant au niveau de son arête vive à travers la région d'intérêt de l'objet (5) en examen, après quoi selon leur nombre et leur progression le nombre et l'épaisseur (t) des couches de la structure en couches dans la région d'intérêt irradiée de l'objet (5) en examen sont déterminés.

2. Procédé selon la revendication 1, **caractérisé en ce que** le rayonnement X est utilisé.

3. Procédé selon la revendication 1 ou 2, **caractérisé en ce qu'** une caméra (3) d'imagerie ayant une résolution de l'ordre de dizaines de $\mu$m est utilisée.

4. Procédé selon l'une des revendications 1 à 3, **caractérisé en ce qu'un** collimateur (2) à fente ayant une surface de fente plate et lisse est utilisé pour modéliser l'âret vive du faisceau (4) plan de rayonnement pénétrant.

Fig. 1

Fig. 2

Signal of secondary radiation for two-layer polychromy

X 1.476

X 0.533

X 0.943

X [mm]

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 2015623 A3

- CZ 201527 A3

**Non-patent literature cited in the description**

- **K. OSTERLOH.** X-RAY Backscatter Imaging with a Novel Twisted Slit Collimator. *In. ECNDT 2012, NDT.net,* 2010